# EUROPEAN PATENT SPECIFICATION

(11) **EP 4 194 841 B1**
(45) Date of publication and mention of the grant of the patent: **23.10.2024**
(21) Application number: 21852341.3
(22) Date of filing: 03.06.2021
(51) Int. Cl.: G01N 21/03, C03C 3/108, C03C 3/091, G01N 21/64

(54) **DEWAR FLASK, PHOTOLUMINESCENCE MEASUREMENT DEVICE, CONCENTRATION MEASUREMENT METHOD, AND SILICON MANUFACTURING METHOD**
DEWARGEFÄSS, PHOTOLUMINESZENZMESSVORRICHTUNG, KONZENTRATIONSMESSVERFAHREN UND SILICIUMHERSTELLUNGSVERFAHREN
VASE DE DEWAR, DISPOSITIF DE MESURE DE PHOTOLUMINESCENCE, PROCÉDÉ DE MESURE DE CONCENTRATION ET PROCÉDÉ DE FABRICATION DE SILICIUM

(30) Priority: 06.08.2020 JP 2020134062
(43) Date of publication of application: 14.06.2023
(73) Proprietor: Tokuyama Corporation, Shunan-shi, Yamaguchi 745-8648 (JP)
(72) Inventor: SAKAI, Junya, Shunan-shi, Yamaguchi 745-8648 (JP); YAMAMOTO, Tomohiro, Shunan-shi, Yamaguchi 745-8648 (JP)
(74) Representative: Bittner, Thomas L.
(86) International application number: PCT/JP2021/021135
(87) International publication number: WO 2022/030093

(56) References cited:
- JP-A- 2013 123 704
- JP-A- 2019 120 359
- US-A1- 2004 014 583
- US-A1- 2011 235 035
- VISSER E P ET AL: "CONSTRUCTION OF A LIQUID HE CRYOSTAT INSERT FOR HIGH SPATIAL RESOLUTION PHOTOLUMINESCENCE EXPERIMENTS ON GAAS", REVIEW OF SCIENTIFIC INSTRUMENTS, AMERICAN INSTITUTE OF PHYSICS, 2 HUNTINGTON QUADRANGLE, MELVILLE, NY 11747, vol. 61, no. 5, May 1990 (1990-05-01), pages 1490 - 1493, XP000128699, ISSN: 0034-6748, DOI: 10.1063/1.1141158
- ANONYMOUS: "Stainless and glass cryostats", KAWAGUCHI LIQUEFACTION CHEMICAL - BLOG, JP, pages 1 - 3, XP009534889, Retrieved from the Internet <URL:https://klchem.co.jp/blog/2010/11/post-1351.php> [retrieved on 20210813]

## Description

### Technical Field

The present invention relates to a dewar flask, a photoluminescence measurement device, a concentration measurement method, and a silicon manufacturing method.

### Background

Conventionally, various methods have been studied for measuring the concentration of impurities (such as phosphorus and boron) contained in polycrystalline silicon. As one example, Non-patent Literature 1 discloses a method as follows. That is, first, a polycrystalline silicon rod is single-crystallized (into a monocrystalline rod) through the Float-Zone (FZ) method. Subsequently, from a straight barrel portion of the monocrystalline rod, a sample is cut out, and the concentration of impurities in the sample is measured through the photoluminescence method. The measurement value thus obtained is converted to an amount of the impurities in the polycrystalline silicon rod by theoretical calculation.

A common method for measuring the concentration of impurities in a sample through the photoluminescence method is to allow liquid helium to be held in a dewar flask which is made of glass and which is placed in a cryostat of a photoluminescence measurement device, and the entire sample is immersed into the liquid helium. As the dewar flask which is made of glass and which is used in the concentration measurement method, a dewar flask made of first grade of hard glass is typically used. Hereinafter, the dewar flask made of the first grade of hard glass is referred to as "conventional measurement-use dewer flask."

Here, helium gas has the property of permeating through glass. Thus, in a case where the liquid helium is held in the conventional measurement-use dewer flask to carry out the concentration measurement, helium gas from the liquid helium rapidly permeates through a glass wall of the dewar flask, and a degree of vacuum of a vacuum layer inside the glass wall is rapidly decreased. Thus, a heat-insulating effect of a heat-insulating layer which is constituted by the vacuum layer is decreased, and the liquid helium is actively vaporized. This makes it impossible to maintain the sample at a measurement temperature (approximately 4K). As a result, it becomes impossible to carry out the measurement of the concentration of the impurities in the sample with use of photoluminescence. Here, the "degree of vacuum" refers to a degree of vacuum under a condition of an extremely low pressure, and is indicated by a pressure of the remaining gas. Specifically, the pressure of the remaining gas means a pressure of the remaining gas in the vacuum layer. In a case where the degree of vacuum of the vacuum layer inside the glass wall is decreased, evacuation needs to be carried out such that the degree of vacuum is recovered to the degree before the concentration measurement. Therefore, when the degree of vacuum is decreased rapidly, the number of the evacuation is increased accordingly.

For example, Non-patent Literature 2 discloses a knowledge for avoiding such inconvenient decrease of the degree of vacuum. Non-patent Literature 2 suggests that an SiOz content of glass correlates with a permeation rate at which helium gas permeates through the glass. Citation List
[Non-patent Literature 1]
   "Electronics and Information Technology Industries Information Standard JEITA EM-3601A High Purity Polycrystalline Silicon Standard" Japan Electronics and Information Technology Industries Association (September, 2004)
[Non-patent Literature 2]
   F.J. Norton, "Helium Diffusion Through Glass" (Journal of the American Ceramic Society, 36, 1953, 90-96)
US 2011/235035 A1 discloses a dewar made of a transparent material such as silica glass for photoluminescence measurements in an integrating sphere.
US 2004/014583 A1 discloses a tungsten sealing glass composition for use in a fluorescent lamp comprising 68% to 74% SiO₂ by weight and 13% to 19% B₂O₃ by weight, and having a coefficient of thermal expansion of 34×10⁻⁷/K to 43×10⁻⁷/K at 30°C to 380°C, said glass composition being used for example in LCDs.

The publication of VISSER E P ET AL: "CONSTRUCTION OF A LIQUID HE CRYOSTAT INSERT FOR HIGH SPATIAL RESOLUTION PHOTOLUMINESCENCE EXPERIMENTS ON GAAS", REVIEW OF SCIENTIFIC INSTRUMENTS, AMERICAN INSTITUTE OF PHYSICS, vol. 61, no. 5, May 1990, pages 1490-1493, discloses photoluminescence experiments on semiconductors at 4.2 K using a He-bath cryostat having fiber optics for transferring optical signals to and from a sample within the cryostat.

### Summary

### Technical Problem

However, Non-patent Literature 2 merely suggests the correlation between the SiO₂ content of the glass and the permeation rate as an empirical rule, and does not disclose generation of a distortion due to cooling from an ambient temperature (approximately 23°C = approximately 296.15K) to an extremely low temperature (approximately 4K). Further, Non-patent Literature 2 does not mention processability of a glass base material into a dewar flask. For the dewar flask made of glass, such processability is one factor to select a glass base material for the dewar flask. In consideration of such background, the correlation between the SiO₂ content of glass and the permeation rate has not been applied to the conventional measurement-use dewer flask. Therefore, in a case where the measurement of the concentration of impurities in a sample is carried out by the photoluminescence method with use of the conventional measurement-use dewer flask, evacuation needs to be carried out many times. This increases a burden on the operator for the evacuation and a cost for the evacuation.

An aspect of the present invention has been achieved in light of the above problem, and it is an object of the present invention to reduce a burden on the operator for the evacuation and the cost for the evacuation in a case where a concentration of impurities contained in silicon in liquid helium is measured through the photoluminescence method.

### Solution to Problem

In order to solve the above problem, a dewar flask in accordance with an aspect of the present invention is a dewar flask which is made of glass and which is used in a case where a concentration of impurities contained in silicon is measured in liquid helium by a photoluminescence method wherein the glass has an SiOz content of not less than 65% by weight and not more than 75% by weight and has an average thermal expansion rate of not less than 25 × 10⁻⁷/°C and not more than 55 × 10⁻⁷/°C when a temperature of the glass is not less than 20°C and not more than 300°C. Note that "average thermal expansion rate" is expressed as such because, at the measurement of the thermal expansion rate of the glass when the temperature is not less than 20°C and not more than 300°C, in fact, an average value of the thermal expansion rate is measured.

In order to solve the above problem, a concentration measurement method in accordance with an aspect of the present invention is a concentration measurement method for measuring a concentration of impurities contained in silicon. In the method, liquid helium and the silicon are held in a dewar flask made of a glass which has an SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C, and the concentration of the impurities is measured by a photoluminescence method.

In order to solve the above problem, a silicon manufacturing method in accordance with an aspect of the present invention includes a concentration measurement step of allowing liquid helium and silicon to be held in a dewar flask, and measuring a concentration of impurities contained in the silicon, the dewar flask being made of a glass which has an SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C.

### Advantageous Effects of Invention

According to an aspect of the present invention, it is possible to greatly reduce a burden on an operator for evacuation and a cost for evacuation in a case where a concentration of impurities contained in silicon in liquid helium is measured through the photoluminescence method.

### Brief Description of Drawings

- Fig. 1: is a view schematically illustrating a configuration of a photoluminescence measurement device in accordance with an embodiment of the present invention.
- Fig. 2: Reference number 201 in Fig. 2 is a view schematically illustrating a state in which a sample is immersed into liquid helium in a measurement-use dewer flask in accordance with an embodiment of the present invention.

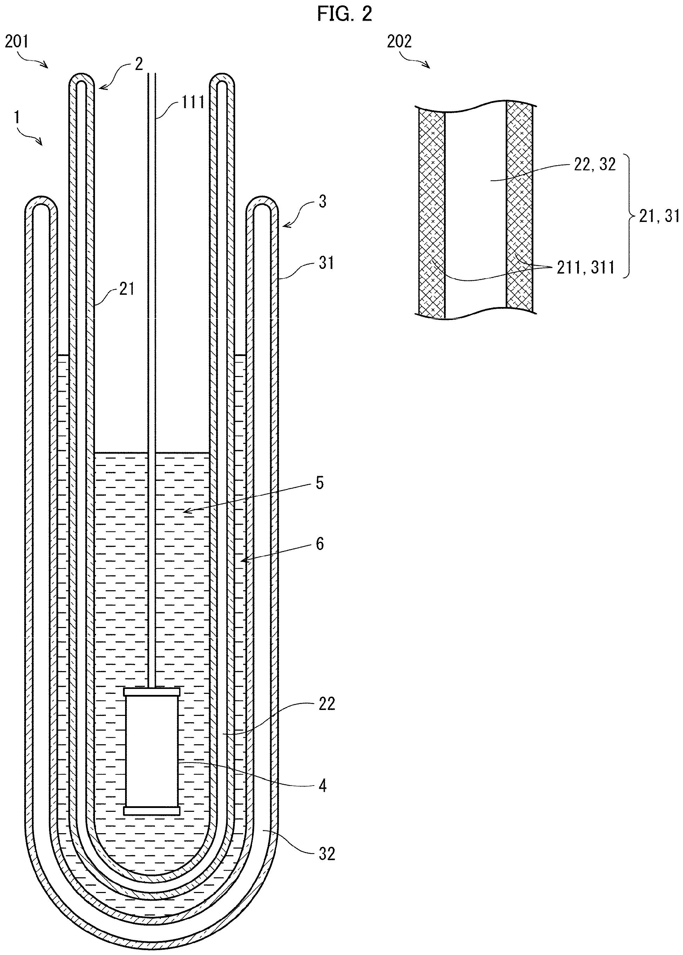

- Fig. 2: Reference number 202 in Fig. 2 is a cross-sectional view illustrating a configuration of a glass wall of the measurement-use dewer flask.

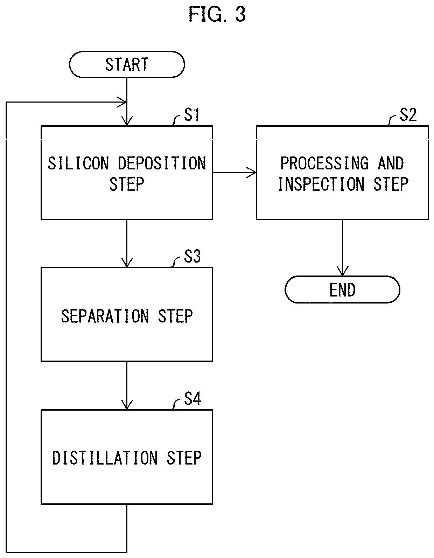

- Fig. 3: is a flowchart showing an example of a polycrystalline silicon production method in accordance with an embodiment of the present invention.

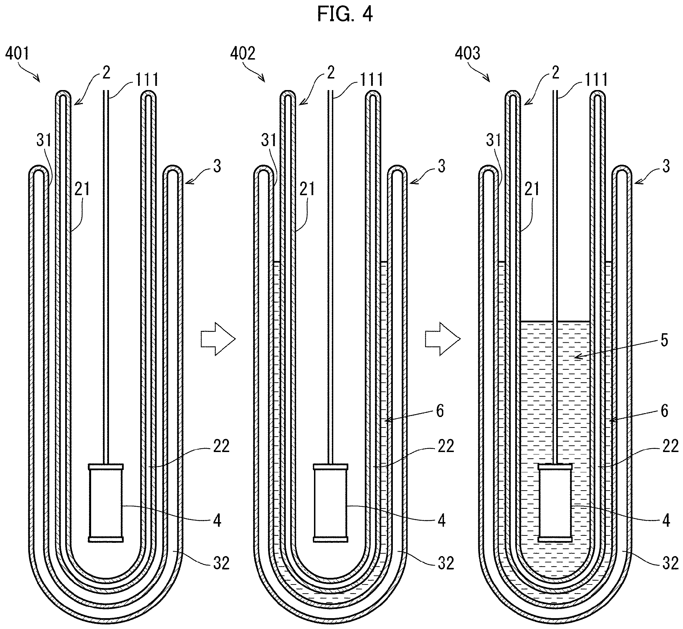

- Fig. 4: is a view illustrating an example of a concentration measurement method in accordance with an embodiment of the present invention. Reference number 401 in Fig. 4 is a view illustrating an insertion step. Reference number 402 in Fig. 4 is a view illustrating a liquid nitrogen holding step. Reference number 403 in Fig. 4 is a view illustrating a liquid helium holding step.

### Description of Embodiments

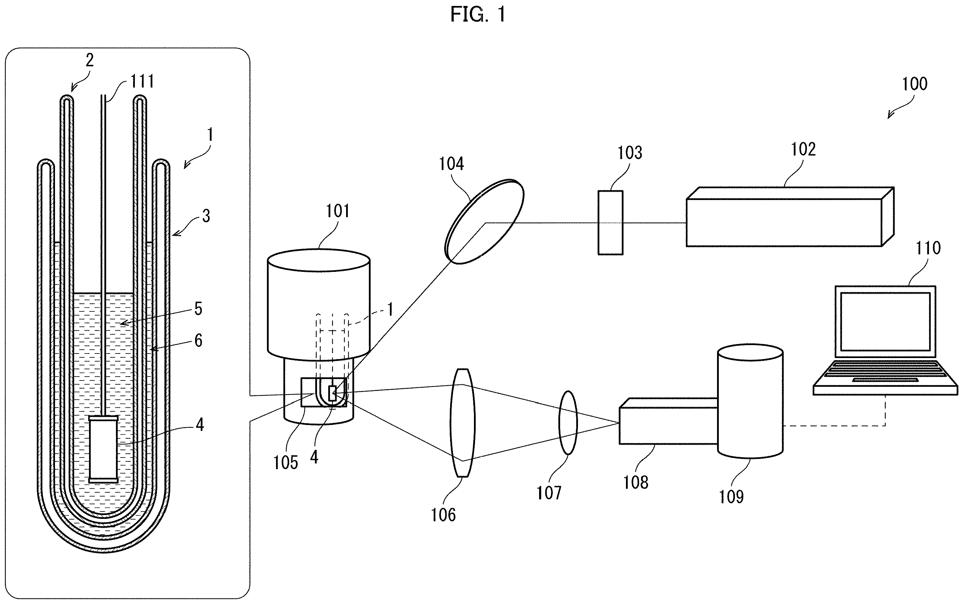

The following will describe an embodiment of the present invention in detail with reference to Figs. 1 to 4. Note that any numerical range expressed as "A to B", in the present specification, means "not less than A and not more than B", unless otherwise specified.

### [Photoluminescence measurement device 100]

First, the following will describe a photoluminescence measurement device 100 in accordance with an embodiment of the present invention with reference to Fig. 1. The photoluminescence measurement device 100 is a measurement device which is used in a case where a concentration of impurities (not illustrated) contained in polycrystalline silicon (not illustrated) is measured through the photoluminescence method. The polycrystalline silicon is an example of the silicon in accordance with the present invention.

The photoluminescence method is a method by which a sample 4 (described in detail later) obtained by single-crystallizing polycrystalline silicon is irradiated with laser light to cause the sample 4 to emit photoluminescence, and the emitted photoluminescence is then analyzed to measure the concentration of the impurities in the sample 4. The photoluminescence is light which is emitted from the sample 4 while excess electrons and holes are formed in the sample 4 by irradiation of the sample 4 with laser light and are recombined.

In the present embodiment, four atoms of P, B, Al, and As are impurities targeted for the concentration measurement with use of the photoluminescence measurement device 100. Note that it is unnecessary that all of the four atoms are targeted for the concentration measurement, but it is sufficient that at least one selected from the group consisting of the four atoms is targeted for the concentration measurement. Alternatively, an atom other than the four atoms may be targeted for the concentration measurement. Examples of the atom which is not any of the four atoms and which is targeted for the concentration measurement with use of the photoluminescence measurement device 100 include C.

As illustrated in Fig. 1, the photoluminescence measurement device 100 includes a cryostat 101, a laser light source 102, a first filter 103, a flat mirror 104, a light collecting lens 106, a second filter 107, a spectrometer 108, a light detector 109, an information processing device 110, and a sample holder 111.

The cryostat 101 is a device for maintaining the sample 4 at a temperature as low as approximately 4K. The cryostat 101 has a measurement-use dewar flask 1 placed inside, and the sample 4 and a liquid helium 5 are held in an inner cylindrical dewar flask 2 (see reference number 201 in Fig. 2; described in detail later) which constitutes the measurement-use dewer flask 1. The liquid helium 5 is used for cooling the sample 4 to approximately 4K. In addition, the cryostat 101 is provided with a window 105 so that the entire sample 4 can be viewed from outside the window 105 in a state in which the sample 4 is held in the cryostat 101 (specifically, held in the inner cylindrical dewar flask 2).

The laser light source 102 emits laser light in a direction toward the sample 4 held in the cryostat 101. The first filter 103 and the flat mirror 104 are disposed between the cryostat 101 and the laser light source 102. The first filter 103 is disposed between the laser light source 102 and the flat mirror 104, and cuts off infrared light contained in the laser light emitted from the laser light source 102.

The flat mirror 104 is disposed between the first filter 103 and the cryostat 101, and adjusts an optical path of the laser light which has transmitted through the first filter 103. Specifically, the flat mirror 104 adjusts the optical path of the laser light which has transmitted through the first filter 103 such that the sample 4 in the cryostat 101 is irradiated with the laser light. When being irradiated with the laser light, the sample 4 in the cryostat 101 emits photoluminescence.

The light collecting lens 106 collects the photoluminescence which has been emitted from the sample 4 in the cryostat 101 and guides the collected photoluminescence to the spectrometer 108. The second filter 107 is disposed between the light collecting lens 106 and the spectrometer 108 and cuts off laser light and diffracted high-order light.

The spectrometer 108 divides the photoluminescence which has been guided by the light collecting lens 106. The light detector 109 detects the light which has been divided by the spectrometer 108 and outputs, as a detection signal, a result of the detection to the information processing device 110. The information processing device 110 processes the detection signal which has been output from the light detector 109 and obtains photoluminescence spectra. Further, the information processing device 110 analyzes the photoluminescence spectra thus obtained to measure a concentration of impurities contained in the sample 4. Examples of the information processing device 110 include a stationary personal computer (PC), a tablet terminal, and a smartphone.

The sample holder 111 is an instrument for immersing the sample 4 as a whole into the liquid helium 5 while holding the sample 4. In addition, the sample holder 111 has a helium gas inlet and outlet (not illustrated) and a liquid helium inlet (not illustrated) formed therein. The helium gas inlet/outlet is a ventilation opening for supplying helium gas into the inner cylindrical dewar flask 2 and for discharging helium gas remaining in the inner cylindrical dewar flask 2 out of the inner cylindrical dewar flask 2. The liquid helium inlet is an inlet for supplying the liquid helium 5 into the inner cylindrical dewar flask 2 so that the liquid helium 5 is held in the inner cylindrical dewar flask 2.

Note that the above-described configuration of the photoluminescence measurement device 100 is merely one example. The photoluminescence measurement device 100 may have any configuration, provided that the measurement-use dewer flask 1 can hold the sample 4 and the liquid helium 5, and a concentration of impurities in the sample 4 can be measured through the photoluminescence method.

### [Measurement-use dewer flask 1]

Now, with reference to Fig. 2, the following will describe the measurement-use dewer flask 1 in accordance with an embodiment of the present invention. The measurement-use dewer flask 1 is used in a case where a concentration of impurities contained in the sample 4 is measured through the photoluminescence method. The measurement-use dewer flask 1 is a dewar flask which has a double-structure such that an outer cylindrical dewar flask 3 accommodates the inner cylindrical dewar flask 2 therein as illustrated in 201 of Fig. 2.

Here, the dewar flask in accordance with an aspect of the present invention refers to a dewar flask which holds liquid helium therein. In the measurement-use dewer flask 1, the inner cylindrical dewar flask 2 corresponds to the dewar flask in accordance with an embodiment of the present invention because the inner cylindrical dewar flask 2 holds the liquid helium 5 therein. In addition, the measurement-use dewer flask 1 can be regarded as a dewar flask in which the inner cylindrical dewar flask 2 in accordance with an embodiment of the present invention is used.

The following description is based on the configuration in which the outer cylindrical dewar flask 3 is disposed outside the inner cylindrical dewar flask 2, and the liquid nitrogen 6 intervenes therebetween. This configuration makes it possible to efficiently cool the measurement-use dewer flask 1. According to this configuration, the outer cylindrical dewar flask 3 does not correspond to the dewar flask in accordance with an aspect of the present invention because the outer cylindrical dewar flask 3 holds the liquid nitrogen 6 therein instead of the liquid helium 5. However, if the outer cylindrical dewar flask 3 is configured to hold the liquid helium 5 instead of the liquid nitrogen 6, the outer cylindrical dewar flask 3 corresponds to the dewar flask in accordance with an aspect of the present invention.

The inner cylindrical dewar flask 2 is made of glass and is constituted by a glass wall 21 having a cylindrical shape and having a bottom. In addition, the inner cylindrical dewar flask 2 has a space 22 formed inside the glass wall 21 throughout all parts of the glass wall 21. With respect to the space 22, evacuation is carried out, so that a vacuum layer is formed in the space 22. In carrying out the evacuation, an evacuation port (not illustrated) is formed at the bottom of the inner cylindrical dewar flask 2, and the evacuation is carried out through the evacuation port. The evacuation port is an outlet at which an opening is formed and through which air inside the space 22 is exhausted. After the evacuation ends, the evacuation port is sealed. Adjustment of the degree of vacuum of the vacuum layer formed in the space 22 is also made through the evacuation port which has been formed at the bottom of the inner cylindrical dewar flask 2. The inner cylindrical dewar flask 2 is one example of the dewar flask in accordance with the present invention, and holds the sample 4 and the liquid helium 5 directly therein.

In the present embodiment, the inner cylindrical dewar flask 2 measures approximately 800 mm in height and approximately 90 mm in outer diameter, the glass wall 21 has a thickness of approximately 5 mm, and a glass plate 211 (see reference number 202 in Fig. 2) surrounding the space 22 in the glass wall 21 has a thickness of approximately 2 mm. Further, in the present embodiment, a second grade of hard glass among borosilicate glasses can be used as a glass which serves as a material for forming the inner cylindrical dewar flask 2.

The outer cylindrical dewar flask 3 is also made of glass and is constituted by a glass wall 31 having a cylindrical shape and having a bottom. In addition, the outer cylindrical dewar flask 3 also has a space 32 formed inside the glass wall 31 throughout all parts of the glass wall 31. However, note that a vacuum layer has originally been formed in the space 32, and the degree of vacuum of the vacuum layer formed in the space 32 is not adjusted. The degree of vacuum of the vacuum layer formed in the space 32 is not adjusted because the liquid nitrogen 6 is held inside the outer cylindrical dewar flask 3 as described below. As a matter of course, it is possible to configure the outer cylindrical dewar flask 3 such that the degree of vacuum is adjustable.

The outer cylindrical dewar flask 3 holds the liquid nitrogen 6 for preventing heat from being given off from the glass wall 21 of the inner cylindrical dewar flask 2. In addition, the inner cylindrical dewar flask 2 is soaked in the liquid nitrogen 6 inside the outer cylindrical dewar flask 3, so that the measurement-use dewer flask 1 having the double structure is formed.

In the present embodiment, the outer cylindrical dewar flask 3 measures approximately 700 mm in height and approximately 140 mm in outer diameter, the glass wall 31 has a thickness of approximately 10 mm, and a glass plate 311 (see reference number 202 in Fig. 2) surrounding the space 32 in the glass wall 31 has a thickness of approximately 5 mm. Further, in the present embodiment, Pyrex (manufactured by Corning; registered trademark) is used as a glass which serves as a material for forming the outer cylindrical dewar flask 3. Pyrex belongs to the first grade of hard glass among borosilicate glasses.

The use of the measurement-use dewer flask 1 having the above-described feature greatly reduces the speed at which the degree of vacuum of the vacuum layer is decreased as compared to the conventional measurement-use dewer flask, and makes it possible to provide the following merits. That is, if the measurement of the concentration of impurities in polycrystalline silicon by the photoluminescence method is used at a quality step during polycrystalline silicon production, the measurement is typically performed at least once a day throughout the year. Accordingly, the concentration measurement with use of the conventional measurement-use dewer flask requires the evacuation at least once a day.

In contrast, with use of the measurement-use dewer flask 1 including the inner cylindrical dewar flask 2 in accordance with the present embodiment, it is sufficient that the evacuation is performed at most once every three months. This can greatly reduce a burden on an operator for the evacuation and a cost for the evacuation. In addition, the measurement-use dewer flask 1 including the inner cylindrical dewar flask 2 in accordance with the present embodiment has as strong a durability after a continuous long-term use as the conventional measurement-use dewer flask has and makes it possible to reduce deformation of the glass wall and damage thereto due to a continuous long-term use so as to fall within an allowable range.

Note that the inner cylindrical dewar flask 2 and the outer cylindrical dewar flask 3 may have any dimension, and can be changed in design as appropriate in accordance with, for example, a size and shape of the sample 4 and a structure of the inside of the cryostat 101. In addition, the glass which serves as the material for forming the inner cylindrical dewar flask 2 does not have to be the second-class hard glass, provided that the glass has an SiOz content of 65% by weight to 75% by weight and has an average thermal expansion rate of 25 × 10⁻⁷/°C to 55 × 10⁻⁷/°C when the temperature of the glass is 20°C to 300°C. Here, the temperatures of the glass which determine the average thermal expansion rate have a lower limit of 20°C, and the lower limit corresponds to the lower limit of possible room temperatures of an inside of the room in which the photoluminescence measurement device 100 is placed. The possible room temperatures of the inside of the room have an upper limit of 25°C. Further, the glass which serves as a material for forming the outer cylindrical dewar flask 3 only needs to be a first grade of hard glass and does not necessarily have to be Pyrex.

Further, in the present embodiment, the description exemplifies the measurement-use dewer flask 1 having a double-structure. However, the measurement-use dewer flask 1 does not necessarily have to have a double-structure such that the outer cylindrical dewar flask 3 accommodates the inner cylindrical dewar flask 2 therein. For example, the measurement-use dewer flask 1 can be constituted by a dewar flask having a single-structure such that a flask is constituted by single glass wall. Note, however, that the glass which serves as a material for forming the dewar flask having a single-structure needs to at least have an SiOz content of 65% by weight to 75% by weight and have an average thermal expansion rate of 25 × 10⁻⁷/°C to 55 × 10⁻⁷/°C when the temperature of the glass is 20°C to 300°C.

### [Method for producing polycrystalline silicon]

Next, with reference to Fig. 3, the following will describe a polycrystalline silicon production method in accordance with an embodiment of the present invention. The production method includes a silicon deposition step S1, a processing and inspection step S2, a separation step S3, and a distillation step S4.

### <1. Silicon deposition step S1>

First, a chlorosilane compound (not illustrated) is reacted with H₂ to deposit polycrystalline silicon (silicon deposition step: S1). In a silicon deposition step S1, a structure of a reactor and a reaction condition thereof are not limited to particular ones, and a known reactor and reaction condition can be employed. Specifically, the silicon deposition step S1 can be carried out through, for example, the Siemens method (a bell jar method) or a vapor-to-liquid deposition (VLD) method. The Siemens method and the vapor-to-liquid deposition method are publicly known, and thus the descriptions thereof are omitted. Note that, in order to deposit polycrystalline silicon efficiently, the silicon deposition step S1 is preferably carried out through the Siemens method.

In the present specification, the chlorosilane compound refers to a compound containing Cl and Si. Examples of the chlorosilane compound contained in a raw material gas include trichlorosilane and dichlorosilane in both the Siemens method and the vapor-to-liquid deposition method.

### <2. Processing and inspection step S2>

Subsequently, a rod of the polycrystalline silicon deposited in the process of the silicon deposition step S1 is cut and crushed so as to have a shape and a dimension which are required by a client (processing step: S2). Further, a sample 4 is prepared from the rod of the polycrystalline silicon, and a concentration of impurities in the sample 4 is measured with use of the photoluminescence measurement device 100, so that a quality of the polycrystalline silicon is inspected (inspection step: S2). When the result of the inspection is "passed", a surface of the product which has been processed is cleaned, and the product is packed. Thereafter, the product is shipped to the client. Note that the inspection step of the processing and inspection step S2 is one example of the concentration measurement step in accordance with the present invention.

### <3. Separation step S3>

Subsequently, an exhaust gas exhausted in the process of the silicon deposition step S1 is separated into a chlorosilane condensate and a gas component (separation step: S3). The exhaust gas contains a chlorosilane compound, H₂, HCl, and a fine silicon powder and may further contain a silane oligomer.

The chlorosilane condensate may contain the fine silicon powder. For example, a fine silicon powder content of the chlorosilane condensate may be 0.01% by mass to 0.3% by mass, in particular, 0.05% by mass to 0.2% by mass. The chlorosilane condensate may be used for applications other than the present production method. The gas component contains, as a main component, a hydrogen gas and HCl. The gas component further contains, in an amount of about several percent by volume, a chlorosilane compound which remains in a form of the chlorosilane condensate, without being condensed and separated. The gas component may also contain, in trace amounts, B and P which are derived from metallic silicon.

In the separation step S3, a cooling temperature for cooling the gas component is not limited to a particular one, provided that the cooling temperature is not higher than a temperature at which the chlorosilane compound is condensed. The cooling temperature can be determined as appropriate in consideration of a cooling capacity of a cooling device to be employed. Note that a lower cooling temperature tends to be more effective in condensation of the chlorosilane compound.

A separation method used in the separation step S3 is not limited to a particular one, provided that the exhaust gas can be separated into the chlorosilane condensate and the gas component, but is preferably a condensation removal method. The condensation removal method is a method for separating the exhaust gas into the chlorosilane condensate and the gas component by cooling the exhaust gas so as to condense the chlorosilane compound.

An exhaust gas cooling method used in the separation step S3 is not limited to a particular one, provided that the exhaust gas can be cooled so as to be not higher than the temperature at which the chlorosilane compound is condensed, and a publicly known method can be employed. Specific examples of the cooling methods include: a method by which the exhaust gas is cooled by causing the exhaust gas to pass through a heat exchanger which has been cooled; and a method by which the exhaust gas is cooled by a condensate which has been condensed and cooled. Each of these methods can be employed singly. Alternatively, these methods can be employed in combination.

### <4. Distillation step S4>

Subsequently, the chlorosilane compound obtained by distilling the chlorosilane condensate obtained in the separation step S3 is circulated to the reactor used in the silicon deposition step S1 (distillation step: S4). This process makes it possible to reuse the chlorosilane compound obtained by distillation as a raw material for generating the polycrystalline silicon in the silicon deposition step S1.

Through the above-described steps of S1 to S4, the polycrystalline silicon is produced. Note that the above-described production method is merely one example, and various production methods can be employed, provided that a concentration measurement is carried out in the processing and inspection step S2 with use of the photoluminescence measurement device 100. For example, a hydrogen chloride removal step may be included in which the gas component obtained in the separation step S3 is brought into contact with a chlorosilane solution, so that HCl is removed. In addition, a hydrogen refining step may be included in which the chlorosilane compound is removed by bringing an activated carbon into contact with the gas component obtained in the above-described hydrogen chloride removal step, so that hydrogen gas is obtained. Furthermore, the "inspection step" of the processing and inspection step S2 can be employed also as one step of a method for producing a monocrystalline silicon.

### [Method for measuring concentration of impurities in polycrystalline silicon]

Now, with reference to Fig. 4, the following will describe a method for measuring the concentration of impurities in polycrystalline silicon in accordance with an embodiment of the present invention. Specifically, the following will describe a preliminary preparation for the concentration measurement of impurities in polycrystalline silicon through the photoluminescence method, an actual measurement, and a series of operations after the measurement ends. Note that the following description is merely one example, and the method is not necessarily limited to the following procedures. The following description assumes that an evacuation port has been formed at a bottom of an inner cylindrical dewar flask 2, and that an inner cylindrical dewar flask 2 has been accommodated in an outer cylindrical dewar flask 3.

First, a sample 4 is prepared from a polycrystalline silicon rod (preparation step). Specifically, from a straight barrel portion of the polycrystalline silicon rod, a round bar is cut out in a diametral direction, and then the round bar is single-crystallized through the FZ method, so that a monocrystalline rod is obtained. After that, the sample 4 is cut out from a straight barrel portion of the monocrystalline rod, so that the sample 4 is prepared. Note that the method for preparing the sample 4 is merely one example, and the method for preparing the sample 4 can be changed in accordance with, for example, a diameter of the polycrystalline silicon rod.

Subsequently, a vacuum (heat-insulating) layer is formed in a space 22 of a glass wall 21 of an inner cylindrical dewar flask 2. For the evacuation to form the vacuum (heat-insulating) layer, for example, a rotary pump (not illustrated) and a turbo pump (not illustrated) are used in combination, and the evacuation is carried out so that a degree of vacuum of the vacuum (heat-insulating) layer reaches 1 × 10⁻⁴ Pa as a guide (evacuation step).

Subsequently, it is confirmed that the degree of vacuum of the vacuum (heat-insulating) layer formed in the space 22 in the glass wall 21 is 1 × 10⁻⁴ Pa (confirmation step). Such confirmation of the degree of vacuum is carried out with use of a manometer (not illustrated) connected to the vacuum (heat-insulating) layer. In a case where the degree of vacuum is lower than 1 × 10⁻³ Pa, the evacuation step is carried out so that the degree of vacuum reaches 1 × 10⁻⁴ Pa.

Meanwhile, in a case where it is confirmed that the degree of vacuum is 1 × 10⁻⁴ Pa, the sample 4 is set to a sample holder 111 (sample setting step). The inner cylindrical dewar flask 2 is then placed in the outer cylindrical dewar flask 3 such that the inner cylindrical dewar flask 2 does not move in the outer cylindrical dewar flask 3 (flask placement step). Specifically, for example, a felt (not illustrated) or the like is adhered to an inner surface of the bottom of the outer cylindrical dewar flask 3, and a bottom surface of the inner cylindrical dewar flask 2 is adhered to the felt, so that the inner cylindrical dewar flask 2 is fixed in the outer cylindrical dewar flask 3 so as not to be vibrated. Such fixation of the inner cylindrical dewar flask 2 allows the bottom surface of the inner cylindrical dewar flask 2 to be disposed at a given height with respect to the inner surface of the bottom of the outer cylindrical dewar flask 3.

Subsequently, a measurement-use dewer flask 1 having a double-structure, which has been constituted by the inner cylindrical dewar flask 2 and the outer cylindrical dewar flask 3 in the flask placement step, is installed into a cryostat 101 (installation step). As illustrated as reference number 401 in Fig. 4, the sample holder 111 to which the sample 4 has been set is then inserted into the inner cylindrical dewar flask 2, and the sample holder 111 is fixed to the cryostat 101 (insertion step).

Subsequently, a hose of the rotary pump is attached, through a cock, to an evacuation port (not illustrated) for pressure reduction which is formed in an upper portion of the sample holder 111, and the evacuation port for pressure reduction is coupled to the rotary pump (coupling step). The evacuation port for pressure reduction is an opening for producing a vacuum (pressure reduction) in the inner cylindrical dewar flask 2 that holds liquid helium 5.

Subsequently, to a gas supply port (not illustrated) formed likewise in the upper portion of the sample holder 111, a gas supply tube is attached (attachment step) through a gasbag (not illustrated). The gasbag is used mainly to facilitate allowing the liquid helium 5 to be held in the inner cylindrical dewar flask 2. In addition, a gas pack is used also for facilitating reduction of a pressure in the inner cylindrical dewar flask 2. Further, the gas pack is used also for allowing a nitrogen gas and the like to be supplied in order to facilitate removal of water vapor, moisture and the like in the inner cylindrical dewar flask 2. Note that the gas pack does not necessarily have to be used.

Subsequently, the rotary pump is operated, and a cock on a rotary pump side is opened, so that a pressure in the inner cylindrical dewar flask 2 is reduced (first pressure reduction step). Specifically, the pressure in the inner cylindrical dewar flask 2 is reduced with use of the rotary pump until the manometer indicates 0.1 × 10° Pa. Subsequently, the cock on the rotary pump side is closed, and a cock on a gas supply side is opened, so that a nitrogen gas and the like are then supplied into the inner cylindrical dewar flask 2 (gas supply step).

Subsequently, after the supply of the nitrogen gas and the like into the inner cylindrical dewar flask 2 has been finished, the cock on the gas supply side is closed, and the cock on the rotary pump side is opened again, so that the pressure in the inner cylindrical dewar flask 2 is reduced again (second pressure reduction step). Similarly as the first pressure reduction step, the pressure in the inner cylindrical dewar flask 2 is reduced with use of the rotary pump until the manometer indicates 0.1 × 10° Pa. Note that, in Examples and Comparative Examples which are described later, a pressure reduction time in the first pressure reduction step was identical with that in the second pressure reduction step.

In the present embodiment, the gas supply step and the second pressure reduction step are repeated required times. Note that, also in Examples and Comparative Examples which are described later, the gas supply step and the second pressure reduction step are repeated for a required number of iterations.

After the gas supply step and the second pressure reduction step are repeated for a required number of iterations so that the pressure in the inner cylindrical dewar flask 2 is reduced to such a degree that the liquid helium 5 can be held, the cock on the rotary pump side is closed to stop the operation of the rotary pump. After the operation of the rotary pump is stopped, the hose and the supply tube which are attached to the upper portion of the sample holder 111 are detached (detachment step).

Subsequently, as illustrated as reference number 402 in Fig. 4, a liquid nitrogen 6 is held in a gap formed between an outer surface of the glass wall 21 of the inner cylindrical dewar flask 2 and the inner surface of the glass wall 31 of the outer cylindrical dewar flask 3 (liquid nitrogen holding step). Specifically, the liquid nitrogen 6 is supplied into the gap through a liquid nitrogen supply port (not illustrated) formed in the upper portion of the sample holder 111, so that the liquid nitrogen 6 is held in the gap. After the liquid nitrogen 6 has been finished being held, the liquid nitrogen supply port is closed to prevent the liquid nitrogen 6 from being volatilized.

Subsequently, as illustrated as reference number 403 in Fig. 4, the liquid helium 5 is held in the inner cylindrical dewar flask 2 under a reduced pressure, in other words, a space in which the sample 4 is present (liquid helium holding step). Specifically, the liquid helium 5 is supplied into the space through the liquid helium supply port (not illustrated) formed in the upper portion of the sample holder 111, so that the liquid helium 5 is held in the space.

The following will describe one example of a method for allowing the liquid helium 5 to be held in the liquid helium holding step. First, a vessel in which the liquid helium 5 has been held in advance and the liquid helium supply port of the sample holder 111 are connected through a dedicated liquid helium transferrer (not illustrated). The connection allows the liquid helium 5 to be supplied from the vessel into the inner cylindrical dewar flask 2 through the liquid helium supply port because the pressure in the inner cylindrical dewar flask 2 is reduced. Here, as necessary, the liquid helium 5 may be supplied into the inner cylindrical dewar flask 2 by the application of a pressure into the vessel in which the liquid helium 5 has been held in advance with use of a nitrogen gas and the like. Finally, as illustrated in 403 of Fig. 4, the liquid helium 5 is held in the inner cylindrical dewar flask 2 in such an amount that allows the whole of the sample 4 to be immersed.

After the liquid helium 5 has been finished being held in the inner cylindrical dewar flask 2, the liquid helium transferrer is detached from the vessel which has held the liquid helium 5. An outlet of the vessel and the liquid helium supply port of the sample holder 111 are then closed (final step of preliminary preparation for measurement).

Subsequently, in a state illustrated as reference number 403 in Fig. 4, a measurement of concentration of impurities in the sample 4 is carried out by the photoluminescence method (concentration measurement step). First, a laser light source 102 of a photoluminescence measurement device 100 is activated, and laser light is emitted from the laser light source 102. Note that a shutter and a slit width should be checked in advance before the laser light is emitted. The sample 4 which has been set to the sample holder 111 and has been immersed in the liquid helium 5 in the inner cylindrical dewar flask 2 is irradiated with laser light, so that the measurement of the concentration of impurities in the sample 4 is started.

A concentration measurement itself in the concentration measurement step can conform to, for example, the method of the standard "JEITA EM-3601A" disclosed in Non-patent Literature 1, or the method specified in Japanese Industrial Standard under "JIS H 0615-1996: Test method for determination of impurity concentrations in silicon crystal by photoluminescence spectroscopy" which is cited in the standard "JEITA EM-3601A". In the present embodiment, it is assumed that the concentration measurement is carried out through a method in conformity with the above-described Japanese Industrial Standard, and the description thereof is omitted.

After the concentration measurement step has been finished, the sample holder 111 is detached from the cryostat 101. The inner cylindrical dewar flask 2 is then detached from the outer cylindrical dewar flask 3, and the liquid helium 5 that remains in the inner cylindrical dewar flask 2 is discarded. After that, the outer cylindrical dewar flask 3 is detached from the cryostat 101, and the liquid nitrogen 6 that remains in the outer cylindrical dewar flask 3 is discarded. After the above-described detachment operations, all of instruments including the inner cylindrical dewar flask 2, the outer cylindrical dewar flask 3, the sample holder 111 and the like are sufficiently dried. In a case where the concentration measurement is carried out with respect to another sample 4, the preparation step and subsequent steps are carried out again.

### [Evacuation step]

In the present embodiment, specifically, the following operations are carried out as an evacuation step. Note that, also in Examples and Comparative Example which are described later, operations similar to the operations described below were carried out. First, a vacuum line is formed by attaching, through a vacuum hose, to a first pipe (not illustrated) equipped with a valve which is connected with the space 22 of the glass wall 21 of the inner cylindrical dewar flask 2, a second pipe (not illustrated) equipped with a valve which is connected with a rotary pump and a turbo pump.

Subsequently, the rotary pump is operated to open and close the valves included in the vacuum line, so that the evacuation is carried out with respect to the space 22 with use of the rotary pump. When pressure reduction is nearly finished (so that the degree of vacuum reaches 0.1 × 10⁰ Pa as a guide), the turbo pump is operated to open and close the valves, so that the evacuation is further carried out. During the evacuation, a degree of vacuum of the vacuum (heat-insulating) layer formed in the space 22 is checked by visually checking a manometer connected with the space 22. The evacuation is then carried out so that the degree of vacuum of the vacuum (heat-insulating) layer is 1 × 10⁻⁴ Pa. When it is confirmed that the degree of vacuum of the vacuum (heat-insulating) layer has reached 1 × 10⁻⁴ Pa, the valves included in the vacuum line is closed, and the operations of the rotary pump and the turbo pump are stopped. The vacuum line and the like are then detached from the inner cylindrical dewar flask 2 such that the degree of vacuum of the vacuum (heat-insulating) layer is maintained.

Note that the above-described contents of the steps and the above-described order in which the steps are carried out are merely examples. The above-described contents of the steps and the above-described order in which the steps are carried out may be changed as appropriate, provided that the measurement-use dewer flask 1 holds the sample 4 and the liquid helium 5 therein, and the concentration of impurities in the sample 4 is measured through the photoluminescence method.

### [Variation]

A photoluminescence measurement device 100, a measurement-use dewer flask 1, and a concentration measurement method which are in accordance with the present embodiment can be applied to a monocrystalline silicon (not illustrated). Further, the application of the concentration measurement method in accordance with the present embodiment to a monocrystalline silicon also makes it possible to produce the monocrystalline silicon. That is, the monocrystalline silicon is also one example of silicon in accordance with the present invention.

For example, the photoluminescence measurement device 100 and the measurement-use dewer flask 1 can also be used for a quality control of a silicon wafer which is made of monocrystalline silicon, specifically, for measurement of a concentration of trace impurities contained in the silicon wafer through the photoluminescence method. In this case, an effect of a thermal noise needs to be eliminated for the measurement of the concentration of trace impurities. Therefore, as in the case of the present embodiment, the liquid helium 5 is held in the inner cylindrical dewar flask 2, and concentration measurement is carried out under low temperature conditions.

Aspects of the present invention can also be expressed as follows:
In order to solve the above problem, a dewar flask in accordance with an aspect of the present invention is a dewar flask which is made of glass and which is used in a case where a concentration of impurities contained in silicon is measured in liquid helium by a photoluminescence method wherein the glass has an SiOz content of not less than 65% by weight and not more than 75% by weight and has an average thermal expansion rate of not less than 25 × 10⁻⁷/°C and not more than 55 × 10⁻⁷/°C when a temperature of the glass is not less than 20°C and not more than 300°C. Note that "average thermal expansion rate" is expressed as such because, at the measurement of the thermal expansion rate of the glass when the temperature of the glass is not less than 20°C and not more than 300°C, in fact, an average value of the thermal expansion rate is measured.

According to the above configuration, the glass which serves as a material for forming the dewar flask in accordance with an aspect of the present invention has an SiOz content of not less than 65% by weight and not more than 75% by weight. Thus, as compared to the conventional measurement-use dewer flask, the helium gas generated in the dewar flask is less likely to permeate through a glass wall of the dewar flask during the measurement carried out by the photoluminescence method. Therefore, as compared to the conventional measurement-use dewer flask, a degree of vacuum of a vacuum layer formed inside the glass wall is less likely to decrease. This can greatly decrease the number of times of the evacuation after the measurement. As a result, it is possible to greatly reduce a burden on an operator for the evacuation and a cost for the evacuation.

Further, for example, in a case where the SiOz content exceeds 75% by weight, helium gas generated in a dewar flask more easily permeates through the glass wall of the dewar flask. This makes it difficult to maintain a low temperature for a long period of time. In contrast, in a case where the SiOz content is less than 65% by weight, components other than SiO₂ are increased instead, and the components have greater effects. For example, a glass which contains PbO in an amount of not less than 20% by weight and not more than 60% by weight has a great average thermal expansion coefficient. This increases a distortion caused by cooling from an ambient temperature to an extremely low temperature. Therefore, the glass is unsuitable as a material for forming a dewar flask to be used at a low temperature. In addition, for example, a glass which contains Al₂O₃ in an amount of not less than 5% by weight and not more than 20% by weight has a high glass transition temperature. This makes it difficult to process the glass into a dewar flask. Therefore, the glass is also unsuitable as the material for forming a dewar flask.

In contrast, in the present invention, the SiOz content in the glass is not less than 65% by weight and not more than 75% by weight. This not only prevents the degree of vacuum of the vacuum layer from being decreased, but also reduces a distortion caused by cooling from an ambient temperature to an extremely low temperature and facilitates processing the glass into a dewar flask. Further, this can greatly decrease the number of time of evacuation after the measurement and can reduce a producing cost of the dewar flask without deterioration of the dewar flask due to repeated temperature rise and temperature drop between an ambient temperature and an extremely low temperature.

In addition, according to the above configuration, a glass which serves as a material for forming a dewar flask has an average thermal expansion rate of not less than 25 × 10⁻⁷/°C and not more than 55 × 10⁻⁷/°C when the temperature of the glass is not less than 20°C and not more than 300°C. Therefore, even in a case where the temperature of the glass wall of the dewar flask is decreased from an ambient temperature to an extremely low temperature during the process of the measurement carried out by the photoluminescence method, the glass wall is less likely to thermally shrink as compared to the conventional measurement-use dewer flask. In addition, after the end of the measurement through the photoluminescence method, in a case where a temperature of the glass wall of the dewar flask is increased from an extremely low temperature to an ambient temperature (20°C to 25°C), a thermal expansion of the glass wall falls within a range which allows the measurement to continue. Therefore, even if the measurement carried out by the photoluminescence method is repeated, deformation and breakage of the glass wall can be reduced so as to fall within an allowable range, and it is possible to achieve a dewar flask whose durability is ensured.

Moreover, for example, a glass having an average thermal expansion rate of less than 25 × 10⁻⁷/°C when the temperature of the glass is not less than 20°C and not more than 300°C would not easily be softened even when the glass is exposed to a high temperature of not less than 1000°C, and would be processed with difficulty. Therefore, the glass is unsuitable as a material for forming a dewar flask. In contrast, in a case where a glass has an average thermal expansion rate of more than 55 × 10⁻⁷/°C, the glass is easier to be distorted by cooling from an ambient temperature to an extremely low temperature. Therefore, the glass is also unsuitable as the material for forming a dewar flask.

In addition, in a dewar flask in accordance with an aspect of the present invention, the glass may have a B₂O₃ content of not less than 10% by weight and not more than 30% by weight. According to the above configuration, the glass tends to have a lower average thermal conductivity than a glass having a B₂O₃ content of less than 10% by weight and a glass having a B₂O₃ content of more than 30% by weight. Thus, the dewar flask is less likely to be influenced by temperature changes which occur inside and outside the dewar flask during the process of the measurement carried out through the photoluminescence method. Therefore, it is possible to improve durability of the dewar flask.

As described above, a glass containing a certain amount of B₂O₃ tends to be able to have a lower average thermal conductivity, in other words, a lower average thermal expansion coefficient. Further, the glass containing a certain amount of B₂O₃ can obtain the effect of lowering a softening temperature while maintaining a chemical durability. However, a glass having a B₂O₃ content of less than 10% by weight has a small effect of lowering a softening temperature, and in some cases, processability (ease of processing) of such a glass is not improved. In contrast, a glass having the B₂O₃ content of greater than 30% by weight make SiOz and B₂O₃ more likely to be separated, and the glass itself tends to be more difficult to use.

In addition, a dewar flask in accordance with an aspect of the present invention may be configured such that the impurities are at least one atom selected from the group consisting of P, B, Al, and As. According to the above configuration, it is possible to determine whether silicon contains at least one atom selected from the group consisting of P, B, Al, and As with use of the dewar flask which enables a significant reduction in the burden on an evacuation operator and a significant reduction in evacuation cost as compared to the conventional measurement-use dewer flask.

In order to solve the above problem, a photoluminescence measurement device in accordance with an aspect of the present invention includes the dewar flask in accordance with any one of the above aspects. According to the above configuration, the photoluminescence measurement device in accordance with an aspect of the present invention includes a dewar flask whose durability is improved and which enables a significant reduction in the burden on the evacuation operator and a significant reduction in evacuation cost as compared to the conventional measurement-use dewer flask. Therefore, in a case where a measurement of concentration of impurities contained in silicon in liquid helium is carried out with use of the photoluminescence measurement device in accordance with an aspect of the present invention, it is possible to significantly reduce the burden on a person involved in the measurement and significantly reduce a cost for maintenance of the dewar flask.

In order to solve the above problem, a concentration measurement method in accordance with an aspect of the present invention is a concentration measurement method for measuring a concentration of impurities contained in silicon. In the method, liquid helium and the silicon are held in a dewar flask made of a glass which has an SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C, and the concentration of the impurities is measured by a photoluminescence method. The above configuration brings about an effect similar to that of a photoluminescence measurement device in accordance with an aspect of the present invention.

In order to solve the above problem, a silicon manufacturing method in accordance with an aspect of the present invention includes a concentration measurement step of allowing liquid helium and silicon to be held in a dewar flask, and measuring a concentration of impurities contained in the silicon, the dewar flask being made of a glass which has an SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C.

According to the above configuration, the silicon manufacturing method in accordance with an aspect of the present invention includes a concentration measurement step. In the concentration measurement step, a measurement of concentration of impurities contained in silicon in liquid helium is carried out with use of a dewar flask which enables a significant reduction in the burden on the evacuation operator and a significant reduction in evacuation cost as compared to the conventional measurement-use dewer flask. This makes it possible to produce silicon at a low cost while reducing the burden on people involved in the production.

### [Additional remarks]

The present invention is not limited to the embodiments, but can be altered by a skilled person in the art within the scope of the claims.

### [Example]

The following will describe, based on a comparison with a measurement-use dewer flask in accordance with each of Comparative Examples of the present invention, a measurement of concentration of impurities in a sample 4 by the photoluminescence method with use of a measurement-use dewer flask 1 in accordance with each of Examples of the present invention. Note that the measurement-use dewer flask in accordance with each of Comparative Examples of the present invention also has a double-structure of an inner cylindrical dewar flask (not illustrated) and an outer cylindrical dewar flask (not illustrated). The inner cylindrical dewar flasks and the outer cylindrical dewar flasks in accordance with Comparative Examples of the present invention have respectively similar configurations to inner cylindrical dewar flasks 2 and outer cylindrical dewar flasks 3 in accordance with Examples of the present invention except components of the glasses and average thermal expansion rates.

### <Composition and average thermal expansion rate of glass>

With regard to the measurement-use dewer flasks 1 in accordance with Examples 1 to 3 of the present invention and measurement-use dewer flasks in accordance with Comparative Examples 1 to 3 of the present invention, Table 1 below lists the components of glasses which serve as materials for forming the flasks and the respective average thermal expansion rates of the glasses. Note that a compositional component (such as SiOz) of each glass was determined through the calibration curb method with use of a wavelength dispersive X-ray fluorescence analyzer (WDX). In addition, an average thermal expansion rate of a glass was determined by the average thermal expansion coefficient which was measured when the temperature of the glass is 20°C to 300°C, with use of a thermomechanical analyzer (TMA).[0089]

**[Table 1]**

| Type of glass | Composition (% by weight) | | | | | Average thermal expansion rate (×10⁻⁷/°C) |
|---|---|---|---|---|---|---|
| | SiO₂ | B₂O₃ | Al₂O₃ | Na₂O | Other components | |
| A | 80.5 | 12.9 | 2.2 | 3.8 | K₂O | 30 |
| | | | | | LiO₂ | |
| | | | | | and others | |
| B | 70 | 28 | 1.1 | - | K₂O | 50 |
| | | | | | PbO | |
| | | | | | and others | |

All of the measurement-use dewer flasks 1 in accordance with Examples 1 to 3 of the present invention had an inner cylindrical dewar flask 2 made of glass B in Table 1 above. Meanwhile, all of the measurement-use dewer flasks in accordance with Comparative Examples 1 to 3 of the present invention had an inner cylindrical dewar flask made of glass A in Table 1 above. Note that, in all of Examples 1 to 3 below, in a first concentration measurement, the measurement-use dewer flask 1 was used in which a degree of vacuum of a vacuum (heat-insulating) layer of the inner cylindrical dewar flask 2 was 1 × 10⁻⁴ Pa, and a degree of vacuum of a vacuum (heat-insulating) layer of the outer cylindrical dewar flask 3 was also 1 × 10⁻⁴ Pa. The same applies to the measurement-use dewer flasks in Comparative Examples 1 to 3 below.

### <Examples 1 to 3>

The outer cylindrical dewar flask 3 in accordance with Example 1 of the present invention was made of the glass A in Table 1 above. The thirty-six samples 4 are set to a sample holder 111, and a first concentration measurement was carried out with use of the measurement-use dewer flask 1 including the outer cylindrical dewar flask 3 made of the glass A. After the first concentration measurement had finished, the degree of vacuum of a vacuum (heat-insulating) layer of an inner cylindrical dewar flask 2 was measured. The result of the measurement showed that the degree of vacuum of the vacuum (heat-insulating) layer of the inner cylindrical dewar flask 2 remained 1 × 10⁻⁴ Pa. As a result, a second concentration measurement could be carried out without the need to perform the evacuation described in the [Evacuation step] above.

As the measurement-use dewer flask 1 in accordance with Example 2 of the present invention, used was the one identical with the measurement-use dewer flask 1 in accordance with Example 1 of the present invention. The thirty-six samples 4 were set to a sample holder 111, and a first concentration measurement was carried out. After that, the steps described in the [Method for measuring concentration of impurities in polycrystalline silicon] above were carried out once a day, and such an operation was repeated for three months (for approximately 75th iterations). After the last concentration measurement had finished, the degree of vacuum of the vacuum (heat-insulating) layer of the inner cylindrical dewar flask 2 was measured. The result of the measurement showed that the degree of vacuum of the vacuum (heat-insulating) layer of the inner cylindrical dewar flask 2 remained 1 × 10⁻⁴ Pa. Before and after all of the concentration measurements, the degree of vacuum of the vacuum (heat-insulating) layer of the inner cylindrical dewar flask 2 remained unchanged at 1 × 10⁻⁴ Pa. Therefore, there was no need for the evacuation from the end of the first concentration measurement to the end of the last concentration measurement.

The outer cylindrical dewar flask 3 in accordance with Example 3 of the present invention was made of glass B in Table 1 above. Operations similar to those in Example 2 were carried out. A measurement result of a degree of vacuum of a vacuum (heat-insulating) layer of an inner cylindrical dewar flask 2 was similar to that of Example 2. Therefore, also in Example 3, there was no need for the evacuation from the end of the first concentration measurement to the end of the last concentration measurement.

### <Comparative Examples 1 to 3>

### (Comparative Example 1)

The outer cylindrical dewar flask in accordance with Comparative Example 1 of the present invention was made of the glass A in Table 1 above. The thirty-six samples 4 were set to a sample holder 111, and a first concentration measurement was carried out with use of the measurement-use dewer flask including the outer cylindrical dewar flask made of the glass A. After the first concentration measurement had finished, a degree of vacuum of a vacuum (heat-insulating) layer of the inner cylindrical dewar flask was measured. The result of the measurement showed that the degree of vacuum of the vacuum (heat-insulating) layer of the inner cylindrical dewar flask was decreased to 6 × 10⁻² Pa. Thus, the evacuation described in the [Evacuation step] above was carried out.

Subsequently, a second concentration measurement was carried out with use of the measurement-use dewer flask in which the degree of vacuum of the vacuum (heat-insulating) layer of the inner cylindrical dewar flask had reached 1 × 10⁻⁴ Pa again by the evacuation. The first concentration measurement took approximately 5 hours and 30 minutes. Further, the evacuation took approximately 2 hours and 50 minutes. Still further, the second concentration measurement took approximately 5 hours and 40 minutes.

### (Comparative Example 2)

As the measurement-use dewer flask in accordance with Comparative Example 2 of the present invention, used was the one identical with the measurement-use dewer flask in accordance with Comparative Example 1 of the present invention. The thirty-six samples 4 were set to the sample holder 111, and a first concentration measurement was carried out. After the first concentration measurement had finished, a degree of vacuum of a vacuum (heat-insulating) layer of an inner cylindrical dewar flask was measured. The result of the measurement showed that the degree of vacuum of the vacuum (heat-insulating) layer of the inner cylindrical dewar flask was decreased to 6 × 10⁻² Pa.

Here, a second concentration measurement was carried out without the need to perform evacuation. After 15 minutes had elapsed from the start of the measurement, the liquid level of liquid helium 5 in the inner cylindrical dewar flask was displaced downward so as to be lower than the level of the samples 4. Therefore, after the displacement, it became impossible to continue the second concentration measurement. As a result, only four samples 4 could be measured at the point in time when it became impossible to continue the second concentration measurement. This is presumably because the degree of vacuum of the vacuum (heat-insulating) layer of the inner cylindrical dewar flask was low at the start of the second concentration measurement, so that the heat-insulating effect was reduced, and the speed at which the liquid helium 5 was vaporized was fastened, resulting in rapid downward displacement of the liquid level of the liquid helium 5.

### (Comparative Example 3)

The outer cylindrical dewar flask in accordance with Comparative Example 3 of the present invention was made of the glass B in Table 1 above. Operations similar to those in Comparative Example 2 were carried out. After the end of the first concentration measurement, a degree of vacuum of a vacuum (heat-insulating) layer of an inner cylindrical dewar flask was measured. The result of the measurement showed that the degree of vacuum of the vacuum (heat-insulating) layer of the inner cylindrical dewar flask was decreased to 7 × 10⁻² Pa.

### Reference Signs List

- 2: Inner cylindrical dewar flask (dewar flask)
- 4: Sample (silicon)
- 5: Liquid helium
- 100: Photoluminescence measurement device
- S2: Processing and inspection step (concentration measurement step)

## Claims

1. A dewar flask (1, 2) which is made of glass and which is used in a case where a concentration
of impurities contained in silicon is measured in liquid helium (5) by a photoluminescence
method, wherein
- the glass has an SiOz content of not less than 65% by weight and not more than 75% by weight and has an average thermal expansion rate of not less than 25 × 10⁻⁷/°C and not more than 55 × 10⁻⁷/°C when a temperature of the glass is not less than 20°C and not more than 300°C.

2. The dewar flask (1, 2) according to claim 1, wherein the glass has a B₂O₃ content of not less than 10% by weight and not more than 30% by weight.

3. The dewar flask (1, 2) according to claim 1 or 2, wherein the impurities are at least one atom selected from the group consisting of P, B, Al, and As.

4. A photoluminescence measurement device (100) comprising the dewar flask (1, 2) according to any one of claims 1 to 3.

5. A concentration measurement method for measuring a concentration of impurities contained in silicon, wherein
- liquid helium (5) and the silicon are held in a dewar flask (1, 2) made of a glass which has an
SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C, and the concentration of the impurities is measured by a photoluminescence method.

6. A method for producing silicon, the method comprising a concentration measurement step of allowing liquid helium (5) and silicon to be held in a dewar flask (1, 2), and measuring a concentration of impurities contained in the silicon, the dewar flask (1, 2) being made of a glass
which has an SiOz content of not less than 65% by weight and not more than 75% by weight and which has an average thermal expansion rate of not less than 25 × 10⁻⁷/°C and not more than 55 × 10⁻⁷/°C when a temperature of the glass is not less than 20°C and not more than 300°C.

## Patentansprüche

1. Dewargefäß (1, 2), das aus Glas hergestellt ist und in einem Fall verwendet wird, in dem eine Konzentration von Verunreinigungen, die in Silicium enthalten sind, in flüssigem Helium (5) durch ein Photolumineszenzverfahren gemessen wird, wobei
- das Glas einen SiO₂-Gehalt von nicht weniger als 65 Gew.-% und nicht mehr als 75 Gew.-% und eine mittlere thermische Ausdehnungsrate von nicht weniger als 25 × 10⁻⁷/°C und nicht mehr als 55 × 10⁻⁷/°C aufweist, wenn eine Temperatur des Glases nicht weniger als 20 °C und nicht mehr als 300 °C beträgt.

2. Dewargefäß (1, 2) nach Anspruch 1, wobei das Glas einen B₂O₃-Gehalt von nicht weniger als 10 Gew.-% und nicht mehr als 30 Gew.-% aufweist.

3. Dewargefäß (1, 2) nach Anspruch 1 oder 2, wobei die Verunreinigungen mindestens ein Atom sind, ausgewählt aus der Gruppe bestehend aus P, B, Al und As.

4. Photolumineszenzmessvorrichtung (100), umfassend das Dewargefäß (1, 2) nach einem der Ansprüche 1 bis 3.

5. Konzentrationsmessverfahren zum Messen einer Konzentration von Verunreinigungen, die in Silicium enthalten sind, wobei
- flüssiges Helium (5) und das Silicium in einem Dewargefäß (1, 2) gehalten werden, das aus einem Glas hergestellt ist, das einen SiO₂-Gehalt von nicht weniger als 65 Gew.-% und nicht mehr als 75 Gew.-% aufweist und das eine durchschnittliche thermische Ausdehnungsrate von nicht weniger als 25 x 10⁻⁷/°C und nicht mehr als 55 × 10⁻⁷/°C aufweist, wenn eine Temperatur des Glases nicht weniger als 20 °C und nicht mehr als 300 °C beträgt, und die Konzentration der Verunreinigungen durch ein Photolumineszenzverfahren gemessen wird.

6. Verfahren zur Herstellung von Silicium, wobei das Verfahren einen Konzentrationsmessschritt umfasst, bei dem flüssiges Helium (5) und Silicium in einem Dewargefäß (1, 2) gehalten lassen werden und eine Konzentration von Verunreinigungen, die in dem Silicium enthalten sind, gemessen wird, wobei das Dewargefäß (1, 2) aus einem Glas hergestellt ist, das einen SiO₂-Gehalt von nicht weniger als 65 Gew.-% und nicht mehr als 75 Gew.-% aufweist und das eine durchschnittliche thermische Ausdehnungsrate von nicht weniger als 25 × 10⁻⁷/°C und nicht mehr als 55 × 10⁻⁷/°C aufweist, wenn eine Temperatur des Glases nicht weniger als 20 °C und nicht mehr als 300 °C beträgt.

## Revendications

1. Vase de Dewar (1, 2) qui est en verre et qui est utilisé dans le cas où une concentration d'impuretés contenues dans du silicium est mesurée dans de l'hélium liquide (5) par une méthode de photoluminescence, dans lequel
- le verre a une teneur en SiO₂ d'au moins 65 % en poids et d'au plus 75 % en poids et a un taux de dilatation thermique moyen d'au moins 25 × 10⁻⁷/°C et d'au plus 55 × 10⁻⁷/°C lorsque la température du verre est d'au moins 20 °C et d'au plus 300 °C.

2. Vase de Dewar (1, 2) selon la revendication 1, dans lequel le verre a une teneur en B₂O₃ d'au moins 10 % en poids et d'au plus 30 % en poids.

3. Vase de Dewar (1, 2) selon la revendication 1 ou 2, dans lequel les impuretés sont au moins un atome choisi dans le groupe constitué par P, B, Al et As.

4. Dispositif de mesure de photoluminescence (100) comprenant le vase de Dewar (1, 2) selon l'une quelconque des revendications 1 à 3.

5. Procédé de mesure de concentration pour mesurer une concentration d'impuretés contenues dans du silicium, dans lequel
- de l'hélium liquide (5) et du silicium sont contenus dans un vase de Dewar (1, 2) en verre qui a une teneur en SiO₂ d'au moins 65 % en poids et d'au plus 75 % en poids et a un taux de dilatation thermique moyen d'au moins 25 × 10⁻⁷/°C et d'au plus 55 × 10⁻⁷/°C lorsque la température du verre est d'au moins 20 °C et d'au plus 300 °C, et la concentration des impuretés est mesurée par un procédé de photoluminescence.

6. Procédé de production de silicium, le procédé comprenant une étape de mesure de concentration consistant à permettre à de l'hélium liquide (5) et du silicium d'être contenus dans un vase de Dewar, et à mesurer une concentration d'impuretés contenues dans le silicium, le vase de Dewar (1, 2) étant en verre ayant une teneur en SiO₂ d'au moins 65 % en poids et d'au plus 75 % en poids et ayant un taux de dilatation thermique moyen d'au moins 25 × 10⁻⁷/°C et d'au plus 55 × 10⁻⁷/°C lorsque la température du verre est d'au moins 20 °C et d'au plus 300 °C.
